# NEW EUROPEAN PATENT SPECIFICATION

(11) **EP 3 242 091 B2**
(45) Date of publication and mention of the opposition decision: **23.04.2025**
(45) Mention of the grant of the patent: 20.06.2018
(21) Application number: 17163314.2
(22) Date of filing: 28.03.2017
(51) Int. Cl.: F24F 11/00, H04W 64/00, F24F 11/30, F24F 11/62

(54) **CONFIGURATION OF A VENTILATION SYSTEM BY RANDOMIZED SELECTION**
KONFIGURATION EINES BELÜFTUNGSSYSTEMS DURCH ZUFÄLLIGE AUSWAHL
CONFIGURATION D'UN SYSTÈME DE VENTILATION PAR SÉLECTION ALÉATOIRE

(30) Priority: 04.04.2016 SE 1630071; 04.04.2016 SE 1630072; 05.04.2016 SE 1630074; 05.04.2016 SE 1650466
(43) Date of publication of application: 08.11.2017
(73) Proprietor: Swegon Operations AB, 535 23 Kvänum (SE)
(72) Inventor: VALDEMARSSON, Sebastian, 131 35 Nacka (SE); ZETTERVALL, Niclas, 531 58 Lidköping (SE); WELLNER, Lars, 531 33 Lidköping (SE)
(74) Representative: Westpatent AB

(56) References cited:
- US-A1- 2014 180 581
- US-A1- 2015 120 063
- US-A1- 2015 327 010

## Description

### TECHNICAL FIELD

The present invention relates to an air ventilation system for providing fresh air to a building, e.g. a Heating, Ventilation and Air-Conditioning (HVAC) system. The invention is in particular directed to the feature of configuring components in a control system for the air ventilation system.

### BACKGROUND

In offices and other larger buildings, there is often a need to be able to control the indoor climate. In order to provide an efficient control for a building is it today often provided with a Heating, Ventilating and Air Conditioning system which generally is referred to as a HVAC system. This system is desired to be able to control the indoor climate according to specific requirements for different parts or individual rooms in the building. For example, the ventilation and amount of fresh air could be set in dependence of the presence of individuals in a room and the heating or cooling demand according to a set, desired temperature. The HVAC system generally comprises a ducting system connected to an air handling unit having fans for taking in fresh air and admitting outlet air out of the building while heat exchanging the inlet- and outlet air streams. The ducting system is further provided with a multitude of components such as air flow controllers, induction units and their associated heat exchangers and air diffusers for admitting air into the respective locations and there are also different kind of sensors and user interfaces for setting a desired room conditions connected to the HVAC system. Components for influencing the flow rate and the quality of the air, e.g. temperature and humidity, as well as sensors for sensing properties of the air and user interfaces or displays are connected to a control system in order to control the HVAC system to reach a desired room condition if possible.

In many cases are there a large number of components as described above incorporated in the control systems and these components are located in many different parts and rooms of the building. In general is therefore each component controlled individually, or possibly a group of components in a certain part of the building controlled together sometimes, since there may be different actual and desired conditions for many different parts where the indoor climate shall be controlled. In order to be able to perform this control accurately for the different parts of the HVAC system by a central control unit is there a need to identify the different components by the control unit. In general is each component which is used for the control of the HVAC system provided with a unique component ID. However, this component ID is not of much use for control of the HVAC system knows where in the HVAC system each component is located. The central control unit needs thus to properly associate the unique component ID of each component with its physical location in order to control the components of the HVAC system adequately to reach the desired set conditions for the different parts of the building. There is thus a need to assign a system location ID to each component in the HVAC system such that its location will be known by the central control unit. The system location ID may for example be defined in a system description of the air ventilation system including a configuration list with system location IDs for components. In general, there is a specific system location ID for each component to be connected to the central control unit even though it could be possible to use the same system location ID for a group of components which shall be controlled in the same way always. As previously mentioned, HVAC systems as described above are in use today for large buildings and one example of such a system is disclosed in US 2015/269503. In recent years, there has been an increased desire to remotely access such control systems, e.g. by using a smartphone, and the systems may have an interface for control by SMS as disclosed in for example US 2016 / 040 900 and US 2014/151 456.

The work with setting up the network configuration and assigning each component at a specific location with its system location ID has earlier predominantly been done manually. One way of doing this is to mount a specific individual component, knowing its component ID, at a predefined location having a system location ID wherein the control system is configured to assign this system location ID to the component ID of the specific component. Another way has been to place the component at its location and manually reading component ID which thereafter is input in the control system to be associated with the system location ID representing the actual position where the component is mounted. Both these systems are vulnerable for mistakes by a programmer or operator. In the first case may the component be mounted at the wrong location and in the second case may the unique identification be misread or assigned to another physical location in the HVAC system if its unique ID is entered to a faulty position in the control system.

The systems described above could be improved by using a more automatized process for configuring the control system and adapting these systems to assure that the components are configured properly in the control system. A highly automatized systems for the set up and control of a HVAC system is disclosed in US 2015 / 327 010 which suggests the use GPS data and/or altitude measurements for verifying a location in a building. The building equipment itself could comprise the tools for deciding its position and report it to a central controller. The location of the building equipment may be used to associate the building equipment with other building equipment for generating control parameters and algorithms. Another automatized procedure is disclosed in US 2015/120063 which describes a way to configure a HVAC system having individually controlled components, each one with a unique ID. However, the process includes the need to bring each component in the system to be assigned with a unique ID in close proximity to a main system controller to be done before mounting. This could be an obstacle if the components are heavy and/or bulky and they need to be carried to the main system controller. In addition, the components could not be mounted if the main system controller is not available. In WO 2010 / 108 548 is disclosed a system which automatically detects when a sensor enters a specific area and may be incorporated it in the control system. Hence, these systems are based on the existence of a working advanced control system which may be accessed during installation which not always may be the case, e.g. when installing the HVAC-system in a building during construction phase or when upgrading an existing HVAC system having a less advanced system.

There is thus a need for a system which may reduce the probability for mistakes made in the configuration of the control system for a HVAC system which may be used also without access to and need to communicate with an advanced HVAC control system during configuration.

### DISCLOSURE OF THE INVENTION

The invention relates to a method for configuring components forming part of a control system for an air ventilation system.

The present invention describes a possibility for an automatized process allowing the components to be mounted at their location in the ventilation system before they will be configured in the control system.

According to an embodiment of the invention are all the components which shall be individually recognized in the control system provided with a component ID. This may have been provided already at the manufacturing process or at a later stage, it may even be done when the components are mounted. However, the important feature is that the components to be used in the control system have been assigned a unique component ID before they may be configured in the control system. The unique component ID could be marked on the product such that it may be read automatically and to be selectively read for each component by an identifier. The marking may be any kind of code or text that may be read from a distance with an identifier. In general is this marking of the product some kind of visible label, e.g. a bar code, QR-code or even text made readable for an identifier from a distance. Whatever marking system that is used is the system intended to function such that it is only the product to which the reader is directed which possibly may be read by the reader, i.e. there should not be a possibility that the selected component could be mistaken for any other component.

In general, the word "component" has in this disclosure been reserved for an element forming part of the air ventilation system and is intended to be connected to the control system via a transmitter and/or receiver. The communication may be by wire or wireless. In most cases are the components adapted to both transmit and receive signals and they may thus in general be provided with a transceiver for this purpose. The components may be elements which are used to control the ventilation and air flow, e.g. dampers in the air ventilation ducting systems, fans for providing an air flow in the air ventilation system, heat exchangers for controlling the temperature of the air flow or air diffusers in the rooms or spaces to be ventilated. Other kind of components which may form part of the control system are different kind of sensors, e.g. humidity sensors, temperature sensors, carbon dioxide sensors or occupancy detectors, or user interfaces where it is possible to require certain features, e.g. a thermostat for setting a desired temperature or a control button for requesting an increased ventilation for a specific time. Hence, the control system may include any component which may provide relevant information concerning present and desired conditions for the comfort and air quality in a room or space as well as adjustable control devices which influence the quality and quantity of air to be ventilated in a certain room or part of a building. In particular, the invention is intended to encompass components selected from the group of components related to control the flow in the ducting system for providing ventilated air to a room. Hence, in one embodiment is the expression "component" intended to refer to air flow control devices located in a room at the outlets of the air ducting system, e.g. air diffusers or induction devices, which are intended to control the air flow into a room from the air ducting system. In another embodiment is "component" intended to refer to a broader range of air flow control components encompassing essentially all kind of air flow control devices which may be controlled to physically influence the air flow in the ducting system from a central air flow inducing unit, such as a fan, to the outlets of the air ducting system, e.g. dampers or valves for controlling the air flow in the ducting system and exhaust air intake for ventilating air out of the room as well as the air flow control devices located at the outlets for admitting air into a room.

In many cases are the components provided with interfaces for being connected by wires to the control system. Even though wireless control systems may be used it is in general more reliable to have a wired system connecting the components with the central control system. Since there is a need to provide the components with power, and thus in general connect the components to the electrical grid, will there be a need to provide electrical wires to the components why communication cables easily may be laid out at the same time and thus connecting the components to a wired information communication net. In these instances may it thus be necessary or desired to provide these components with a separate wireless interface in order to be able to be connected wirelessly to the identifier and be able to configure the component without the need to be plugged. To be able to configure the components wireless is in general a great advantage since the components may be located at locations, e.g. in the ceiling, where it is hard to reach the component in order to plug in the identifier.

Each of the components to be configured in the control system has been provided with some kind of signal system. The signal system could for example be used to recognize that the component is selected, e.g. identifying the component by its component ID, or for indicating the status of a component. This signal system may for example be a light indicator, e.g. a LED-light, a sound indicator creating a "Blip"-sound or any kind of recognizing feature which responds when the component is selected. In this case is the important thing with the indicator that it is physically connected to a specific component and may be easily recognized and used to identify a component or a group of components in a selected state and where a component is located.

In order to identify a specific component or a group of components is an identifier used. The identifier is of course designed to function and interact with the components and may thus be designed to function in different ways depending on how the component ID is marked onto or comprised in the components. Since there are indicators provided on the components may it easily be used identifiers which could indicate more than one component since it may be possible to for example scroll in a list in the identifier to see which components that are selected and to make a selection from this list of a system location ID which could be tried for being the desired component. The identifier could also for example be an IR-reader for reading a bar code or QR-code or some kind of short range wireless communication in order to be able to identify components within a limited space. To be noted, an identifier need not to be a single unit but could comprise a set of units forming an identifier, e.g. one unit for decoding or reading the identity and another unit for displaying the selected component or components. However, an identifier as described herein always includes the feature of being able to identify one component or a group of components to be selected and some way to display the selected components. In general, there is also a confirmation on a selected component itself revealing its status as being selected by its signal system, e.g. a blinking light. In the following examples may there be selection procedures in which several components are selected in different steps during a selection procedure in order to finally select a specific component while in other selection procedures is only one single component selected at a time. Regardless of if only one single component is selected or several components are selected should there be an identity between the components identified in the identifier, e.g. by displaying a list of identified components, and the physical components which indicators are indicating them as selected. However, this feature is not necessary when there is appositive identification of one single component, e.g. using a bar code- or QR-reader, even though it may be a useful feature to have a response from the component that it has been selected. In any case, there should preferably be some kind of recognition that the component has been selected and its component ID read. The selected component could for example be displayed in the identifier and/or there could be a sound indicating that the component has been selected. This recognition on the identifier could of course be performed together with an indication on the product itself.

Above has it been explained the function of some of the devices used in the system as well as defining some of the terms which will be used in the method explained below for configuring components in an air treatment system such as a Heating and Ventilating Air-Conditioning (HVAC) system. The components forms part of a control system for the air ventilation system and the control system comprises one or several components selected from the groups of flow control components such as fans, dampers and air inlet diffusers, sensor components which for example sense temperature, humidity, carbon dioxide content or input control components such as user interfaces or other control buttons or levers for setting a desired condition. Also displays for indicating conditions could be included as a component in the air ventilation control system as well as heat exchangers. The components are connected to a central control unit when the components are configured and the air treatment system is in use such that the central control unit may control the air ventilation system and the quantity and quality of the ventilated air. Depending on their functions are the components provided with a transmitter and/or receiver for sending an input signal to the central control system to be used for information purposes or computing a control output command by the control system and/or receiving an output signal from the central control system in order to send information or control the component associated with the respective transmitter and/or receiver. In general, the components are provided with a transceiver allowing a component to send and receive information signals. Each of the components is further provided with an indicator and an Electronic Control Unit (ECU). The ECU is programmed to activate the indicator at appropriate occasions, e.g. when there is an error in the unit, when the component is active or the intensity of the components activity. The ECU is also programmed to indicate when the component has been selected by an identifier sending an identification signal selecting one or several of the components which may for example be used during configuration of the central control system. The configuration comprises the steps of:
I. Preparation, in which the components and the identifier are prepared to be able to configure the setup of the system,
II. Selection procedure, in which a component is identified by its identity and location in the system, and
III. Configuration, in which the component is configured in the control system so as to be able to be identified concerning its location and identity by the central control unit

These steps are intended to be performed in the order described above, at least to such an extent that the first step should be finished before the second step is finished and the second step will be finished before the third step is finished for at least one component. Each of these steps will now be further explained in detail below.

The first step, preparation (I), has been divided into two different preparatory procedures, step a and step b, which may be performed in any order. In one of these steps, referred to as step a, is one or several of the components which have been described above located at its intended physical location or position in the air ventilation system. Preferably is the component mounted as it should be incorporated in the system when the system is working but this is not necessary, it may just as well be merely placed at its location or provisionally mounted in order to be completely mounted in the system at a later stage. A component which is located at an intended position in the system has been assigned a unique component ID before it was located at its intended position or it may be assigned a unique component ID after it has been located at its intended position. However, in many cases a component is assigned a unique component ID (cID) already when it is manufactured at the factory. The unique cID could be marked on the product such that it may be read automatically and to be selectively read for each component by an identifier, e.g. a bar code reader or the like. However, the product may comprise a RFID or an ECU having the cID in its memory such that the component may be recognized by an identifier including a sender for identifying one or several selected components. Whatever marking system that is used is the system intended to function such that it there is a response by the indicator associated to the selected component or components. The response by the indicator could be useful also in those cases when there is only the product to which the reader is directed which possibly may be read by the reader, i.e. there should not be a possibility that the selected component could be mistaken for any other component, in order to assure a user that the component confirms it has been selected.

In another step, referred to as step b, is the identifier provided with a system description of the air ventilation system. This system description is a representation of the air ventilation system which may be more or less detailed, e.g. a 3-D image revealing essentially the complete air ventilation system, a simpler plan view merely indicating the more relevant features of the air ventilation system or configuration tree. However, the system description shall at least comprise information concerning how the components forming part of the control system are referred to by the central control system and where in the air ventilation system they are located. Hence, the system description should include a configuration list with system location IDs for components in the air treatment systems which will be connected to the central control system. By configuration list is herein intended to include any kind of formalized information providing information of system location IDs which may be used when assigned to a component to be readily recognized by the central control system to identify the kind of component and where it is located in the air ventilation system. Hence, by performing step a and b will the air ventilation system be ready for the next main step in the configuration method, the selection procedure (II).

The selection procedure (II) has been divided into three partial steps, step c, d and e, which will be performed as described below.

In step c is the physical location of the desired component to be configured in the air ventilation system identified. In general, this means the person who is configuring the system will walk to be in the vicinity of the desired component to be configured. The identifier should be brought to this location and located to be in reach for wireless communication with the desired component. Hence, the identifier may now communicate with the desired component. The person who is at the location should also be aware of which of the components in the system he is selecting as the desired component. It shall be noted that step c could be performed before step a and/or b. however it is therefore described that the preparation (I) not necessarily must be completed before the selection procedure (II) starts even if it is in general not an efficient way of working.

In the next step, step d, is the identifier used for sending an identifying signal in order to identify the desired component. The signal sent from the identifier may thus reach a receiver or transceiver in the desired component via wireless communication. There are several ways in which this identification via wireless communication may be done which will be explained more in detail when referring to different embodiments of the configuration method. However, the identifier is adapted to send an identifying signal which the components are designed to be able to be identified from, in some cases for selecting a single component or for a group of components. In step e is it disclosed that step d shall be repeated until the indicating signal from the indicator of the desired component is indicating a selected state and the identifier displays only the desired component, or displays only one component being in the same selected state as indicated by the indicator, of the components in the configuration list. By this is meant that either is it only one component shown, or being possible to select, in the display or there may be possible to select two or more components but they are in some way marked to be indicated differently. For example, there may be two components shown in the display whereof one is marked "fast blinking" and the other one is marked "slow blinking". Hence, if the indicator on the desired component is blinking slowly, the component marked "slow blinking" is thus in the same selected state as indicated by the indicator. In another example, three components may be shown being marked "YELLOW", "RED" and "BLUE" while the indicator is indicating a blue light and it should thus be the "BLUE" component in the display which should be elected. Hence, there should be obvious choices for making this selection from the display.

Hence, when the selection procedure (II) is finished should there be only one component selected in the identifier and there should only be the indicator on the desired component indicating only this physical component to be selected, thereafter may the configuration (III) step continue.

In the configuration step (III) is a pairing event performed, this step is also referred to as step f. In the pairing event is the desired component, having its unique component ID and indicated to be in a selected state by the indicator provided on the component, paired with the system location ID which is displayed in the identifier. By pairing these IDs, the component ID and system location ID, is it meant that these IDs are connected to be recognized by each other. For example, the pairing event may include the feature of assigning the location ID to the component such that the component may be recognized by the system location ID as well as by its original component ID. Another way to perform this could be to send information to the central control unit to recognize that component ID for the desired component should be used when the central control unit is receiving or sending information to the component located at the place which is assigned to the selected system location ID used in this pairing event. Or as still an alternative, the paired system location ID and component ID may be stored in a separate memory and be used as a look up table or translator when sending information from the central control system to the desired component. Hence, there are many ways of performing the pairing event such that the desired component may be recognized by the system location ID by the central control unit.

The method described above may have different ways for selecting the desired component. In one way this is performed by sending a group selective identifying signal from said identifier to identify a group of components. By group selective identifying signal is meant a signal which provides for a division of a group intended to be the subject of the signal to be divided into smaller groups which may be identified by having the same indicating feature from the indicator for all components belonging to the same subgroup. Hence, the components within reach for the identifier and belonging to the group which is desired to be activated by the signal from the identifier will be influenced by the group selective identifying signal such that the indicators of a first subgroup of the identified group of components will indicate a first indicating signal which is different from a second indicating signal from a second subgroup of the identified group of components. There may of course be further groups if desired having further different indicating signals. From these subgroups groups may y anyone of the groups be selected by the identifier to be further processed by the identifier, in general is the desired component within the selected group such that the selected subgroup may be used as the identified group of components in a repetition of step d in order to be able to identify only the desired component when this have been repeated sufficiently.

The subgroup of components selected to be further processed by the identifier should of course comprise at least 2 components and there may be a further selection signal sent, e.g. another group selective identifying signal, to this group of components such that these components are further divided into at least two new groups of components to be selected to be further processed by the identifier.

If the subgroup of components selected to be further processed by the identifier comprises only one component is the selection procedure finished and this component will be further processed in step f and be used for a pairing event.

The indicating signal from the indicators could be a light and the indicating signal could be differentiated by the frequency of the blinking or different blinking patterns. If there is a group of lights, e.g. several light diodes or LED lights, could the number or combination of lighted lights be used for distinguishing groups.

The group selective identifying signal from the identifier could be adapted to identify only a suitable, selected group of components, e.g. to be adapted to only include components within a specific product category and/or in a certain zone.

The identifier could also be arranged to send a component specific signal corresponding to a single unique component ID (cID). The signal could be sent to a multitude of components within reach for the identifier whereby one single indicator corresponding to said unique component ID (cID) indicates that said single component (1a-h) is selected. The procedure is repeated until said component specific signal is selecting the unique component ID (cID) for the desired component to be paired. This method may be time consuming if there are many components of the same kind but may for example be efficient when there are few components, e.g. for a single sensor or the like.

As an alternative, an identifier which positively identify said unique component ID of the desired component by pointing at or being within a prescribed distance from the physical component could also be used. The physical component to be selected may be identified by a signal from the identifier causing the unique component ID of the desired component to be transmitted to the identifier.

An advantage with the method described above is that there is possible to get a feedback for a technician performing configuration or commissioning of a component or a group of components directly without being connected to the central control system. Since the indicating device is located on the components themselves and the indicating signal is controlled by the local ECU it is possible to know which component that has been selected also when there is no contact with the central control system. The identification of the components may be stored in a local memory connected to the identifier or even be paired in the memory of the identifier. The component ID may later on be transferred to the central control system such that the component ID is recognized by the system location ID.

### BRIEF DESCRIPTION OF THE DRAWINGS

The present invention will now be described more in detail with reference to the appended drawings, where:
- Figure 1: discloses an overview of a ventilation system for a room in a building
- Figure 2: discloses a component of the system
- Figure 3: discloses a system description of the air ventilation system with system location IDs (sl-IDs)
- Figure 4: discloses a system description of the air ventilation system with system location IDs (sl-IDs) and component IDs (cIDs) for components mounted in the system in an unpaired state
- Figure 5: discloses a system description of the air ventilation system with system location IDs (sl-IDs) and component IDs (cIDs) for components mounted in the system in a paired state
- Figure 6: discloses a block diagram of a method for pairing and configuring a control system for an air ventilation system

### DETAILED DESCRIPTION

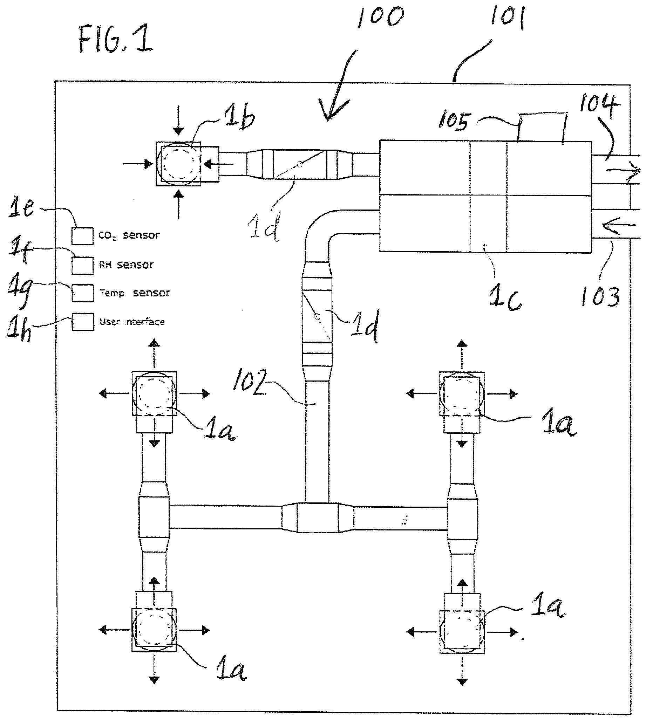

In figure 1 is disclosed a ventilation system 100 in a room 101 in a building (not shown). The ventilation system 100 comprises a multitude of components (1a-1f) which are connected to a ducting system 102 and forms part of a ventilation control system. Among the components (1a-1f) are there flow control components (1a-1d) such as four air diffusers (1a) for admitting air into the room 101, exhaust air intake (1b) for ventilating air out of the room 101, a main ventilation unit (1c) which provides for heat exchange of fresh air intake and exhaust air and induce a flow in the ducting system 102 and 2 dampers (1d) for controlling the flow in the ducting system 102. The main ventilation unit 1c is connected to a fresh air intake 103 and an exhaust air outlet 104 which are connected to the ducting system 102.There are also present a number of sensor components (1e - 1g) in the room 101 such as a carbon dioxide sensor (1e) also referred to as CO2 sensor, a humidity sensor or RH sensor (1f) wherein RH means Relative Humidity and a temperature sensor (1g). There is also present a user interface (1h) which may be a control input device for setting a desired temperature or for demanding increased ventilation for a predefined time limit. The user interface (1g) could also comprise a display for information concerning present conditions in the room 101. These components (1a - 1h) only serve as a few examples of different components which may be present in the ventilation system. In general, the word "component" has been reserved in this description for devices which forms part of a control system for the ventilation system, i.e. devices which control the flow and/or the quality of the ventilation air as well as sensors for indicating relevant properties of the air or user inputs for setting desired values for air properties.

When the ventilation system 100 is functioning are the components (1a-1g) which forms part of the control system connected to a central control unit (CCU) 105 which has been located close to the main ventilation unit 1c. In general, the main ventilation unit 1c and is located in another room and is adapted to provide for ventilation in several rooms or even one or several buildings. However, the main ventilation units 1c has been located in the room 101 in this example for serving the purpose of illustrating and understand in a better way how the ventilation system 100 works. In this example has the central control unit (CCU) 105 been located close to the main ventilation unit. Such a CCU 105 may be designed to control one or more main ventilation units and components associated to the ventilation systems. Hence, there is in general neither present a CCU 105 in every room and the CCU 105 is included for better illustrating the control system of the air ventilation system.

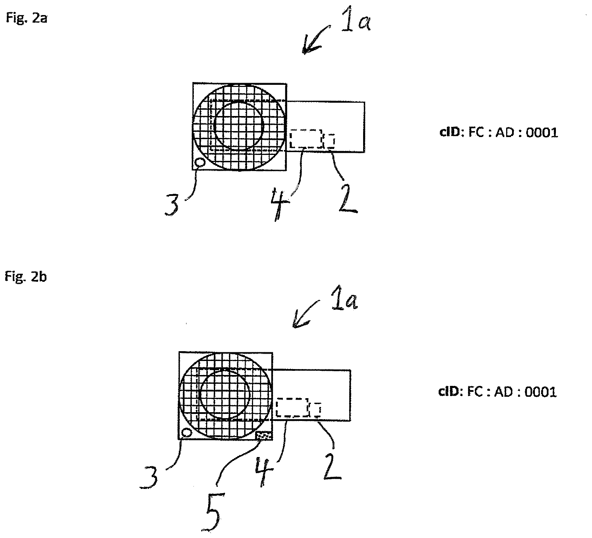

In figure 2 is disclosed a general description for features which are common for all the components (1a - 1g) which are disclosed in figure 1 and are intended to form part of a control system for such an air ventilation system 100 as exemplified in figure 1. The component is exemplified by an air diffuser 1a but could have been any of the other components disclosed in figure 1 or any other component which is intended to form part of a control system for such a ventilation system 100 as shown in figure 1. The air diffuser 1a comprises a transceiver 2 which may be used for communicating with the CCU 105 (se figure 1). The transceiver 2 is adapted to be able to transmit and receive signals and could be designed to be wireless or connected by wires to the CCU 105. The transceiver is further connected to an Electronic Control Unit (ECU) 4 which is programmed to control the air diffuser 1a and to compute control signals and information to be transmitted and received by the transceiver 2. The transceiver 1a could be substituted for a transmitter or receiver if the component only needs to transmit or receive a signal. The component 1a has been provided with an indicator 3. The indicator could be a light source such as LED light or diode. The indicator is intended to indicate a status of the component 1a and is used in the configuration of the control system by for example indicating a component is selected, a pairing event is occurring or that the component has been configured in the air ventilation system.

The air diffuser 1a has further been provided with a unique component ID referred to as cID. In general may this this unique cID be represented by a long row of number and letters, e.g. 00:20.8C:00:08:17:54:6D. In many cases is this unique cID in addition to be component specific also giving information about product category and product kind. The products cID may be comprised visually, e.g. by marking the product with a readable plain text as above. The cID could also be programmed into the ECU 4 or comprised in a RFID. In addition, the product identity could be marked on the product by code intended to be read by an identifier. This is shown in figure 2b where the component has been provided with a label 5 which may for example be a bar code or QR code which may be read automatically by an identifier. The information comprised in the label should at least comprise the cID for the component to be useful. The plain text as disclosed above could also be used but such text is in general less reliable to be read from a distance. The unique cID is generally provided at the factory but may also be assigned later on if desired.

In figure 2 has the component 1a been assigned a component ID (cID) which has been shortened compared to what is normally used in order to better illustrate how such an ID may be built up to serve different purposes. The component 1a has been assigned the cID "FC:AD:0001" which is written beside the component. This cID is intended to provide the information that the component belongs to main group flow controllers (first two digits FC), further to subgroup air diffusers (third and fourth digits AD) and the last four digits (0001) will respond to a unique identity number. Hence, the cID as described herein serves both the purpose of identifying product category and kind as well as being a unique identification of the component.

A list of the component IDs in figure 1 could be the following:

| | |
|---|---|
| First air diffuser (1a): | FC: AD: 0001 |
| Second air diffuser (1a): | FC: AD: 0002 |
| Third air diffuser (1a): | FC: AD: 0003 |
| Fourth air diffuser (1a): | FC: AD: 0004 |
| Exhaust Air intake (1b): | FC: EA: 0001 |
| Main unit (1c): | FC: MU: 0001 |
| First damper (1d): | FC: DU: 0001 |
| Second damper (1d): | FC: DU: 0002 |
| CO2 sensor (1e): | SU: CO: 0001 |
| Humidity sensor (1f): | SU: RH: 0001 |
| Temp. Sensor (1g): | SU: TE: 0001 |
| User interface (1h): | CI: UI: 0001 |

In this list are thus the first two digits of flow control components (FC), sensor units (SU) respectively control input devices (CI) the same to identify the groups of components while the third and fourth digits are dividing the groups into subgroups depending on the product categories and the last four digits will give each component a unique component ID (cID).

In order to get the air ventilation system in figure 1 to work properly the control system must be configured. The components 1a-h needs be mounted to the air ventilation system 100 at appropriate locations and connected to the central control unit 105. The central control unit needs to know which components that have been mounted at which location. In some cases, e.g. when a group a components are intended to be controlled in exactly the same way, may it not be necessary to know exactly which component that has been assigned an exact location. As an example, if all the four air diffusers 1a located in the room 101 in figure 1 shall be controlled in exactly the same way may it be enough to group these four units together and use the same identity when sending control commands from the CCU 105 to the air diffusers 1a. However, the CCU 105 must be able to recognize the four components located at these places.

In order to be able to control the air ventilation system has the location of each component which is included in the air ventilation system been provided with a system location ID according to a system description. This system description may define different groups or zones. For example, room 101 in figure 1 could be defined by being located in building 3 of a complex of buildings. The building may thereafter be divided in sections, e.g. could different floors be different sections. The room 101 could be located in section A corresponding to a floor. The section may thereafter be divided into different rooms and the room 101 in figure 1 could be assigned to be room 3. These definitions could for example be used such that all components in this room will be assigned a system location ID (sl-ID) which starts with 3A4 indicating building, zone respectively room.

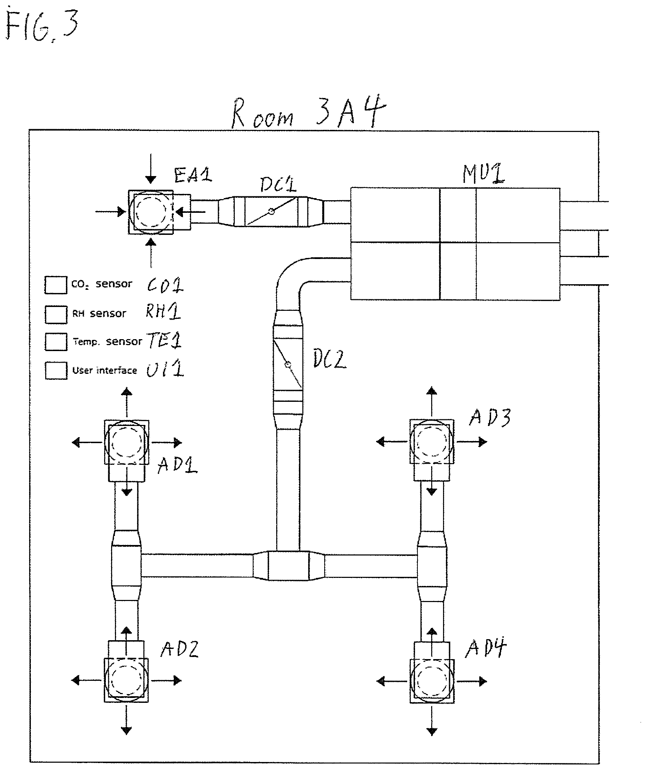

In figure 3, which is based on the very same figure as is presented in figure 1, is disclosed a system description in which all the components are marked with a system location ID (sl-ID). A system description is thus a representation of the air ventilation system 1 disclosed in figure 1. At the top of the system description is written "room 3A4". This means these three characters are intended to be the 3 first digits for each system location ID for the components represented in figure 3 and the last digits are written at each represented component. As can be seen in figure 3 all represented components have been provided with a unique sl-ID. This is essentially necessary for all components with the exception for the air diffusers which could have been assigned the same sl-ID if they are intended to be controlled in the same way.

In order to configure the air ventilation control system is there a need to connect the sl-ID for each represented component in figure 3 with the unique component ID. Hence, the central control unit (CCU) 104 needs to be able to recognize the respective ECUs 4 for each component 1a-g in order to know which component 1a-g which the CCU is communicating with via their transceiver 2.

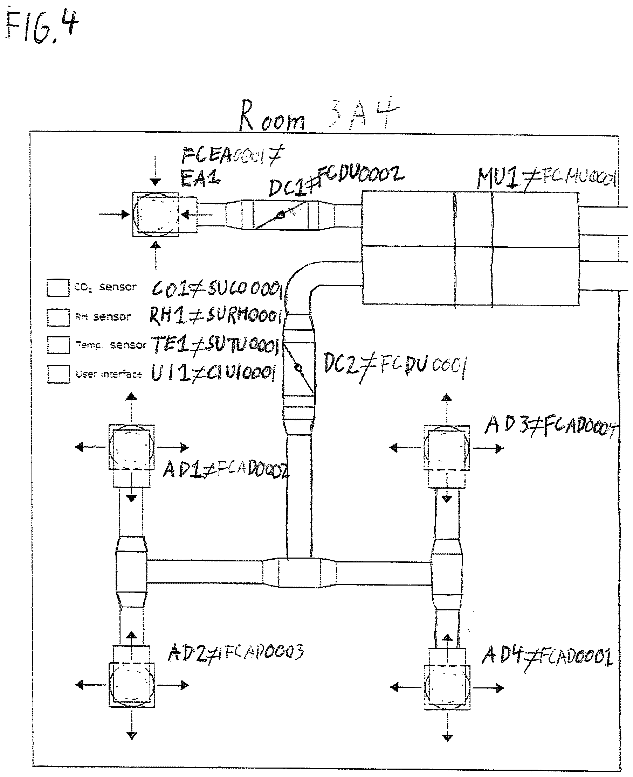

In order to connect these IDs, cID and sl-ID, are the physical components located at its intended positions, preferably mounted to the air ventilation system 1 as they should be connected. In figure 4 this is illustrated by also having appointed the component ID besides each component. However, there has been provided an inequality sign between the different identities since there is no connection or recognition between the identities at this moment.

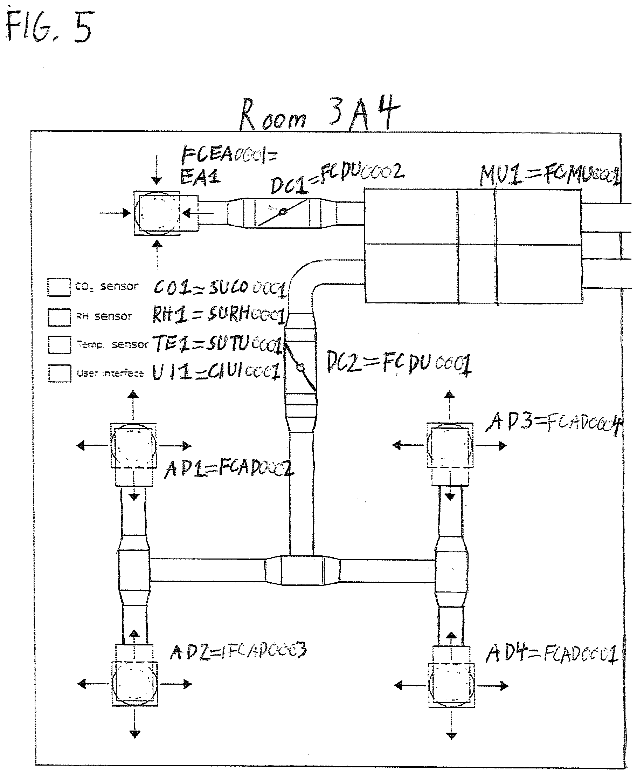

In order to make the component mounted to the air ventilation system, having its component ID, to be able to be recognized by the central control unit 105, must these two identities identify each other. This could be made by a pairing event. The operator is selecting which component to be identified from the system description, i.e. selecting a defined system location ID and position himself where the component is mounted, at a location where the component ID may be identified by using the identifier, e.g. by sending a signal selecting one or several RFID intending to identify the desired component ID. The correct system location ID is selected from a list of components in the identifier. Thereafter is the identifier used to identify the component ID and when the desired component is the only component to be selected from the list in the identifier and the indicator 3 of the selected component is indicating, e.g. blinking, that it is selected may the component ID be paired with the system location ID. The pairing may result in that the component will be provided with the identification such that it recognizes a signal from the CCU 104 directed to the paired system location ID, the component ID could be stored in the CCU such that it will send signals addressed to the component ID and/or store the paired connection in a separate translator which is used when transferring information between the CCU 104 and ECU 4 of the paired component. The specific way this pairing is stored is of less importance for the system described herein. When all units have been paired is thus the control system for the air ventilation system configured and there is possible for the components at each location to be readily controlled by the CCU. Hence, in figure 5 is the system disclosed after the pairing action has been completed for all components and this is thus described by marking the connection between the identities with a sign of equality.

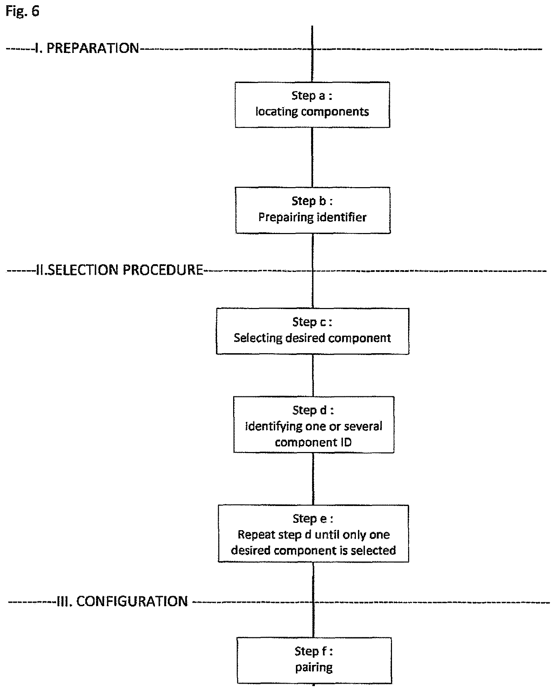

In figure 6 is disclosed a diagram concerning the configuration procedure.

The configuration is divided into three main procedures to be performed: Preparation (I), selection procedure (II) and configuration (III).

In the preparation (I) are there two steps which are performed, step a which is represented by the first block and comprises the feature of locating the components 1a-h in the air ventilation system, and step b which is to prepare the identifier by loading a configuration list of the air ventilation system comprising system location ID for the components 1a-h in the air ventilation system 101.

In step a are thus the components located in the system at its desired locations, preferably also mounted so as to function as desired when the air ventilation system 1 is working. In general it is desired to mount all components, or at least all components in a zone or area, before the configuration of the control system is started but the configuration of a component could also be made if only one single component is located at its location in the system. The components are in general already provided with a unique component ID when manufactured. Otherwise this may be performed at any time before the system shall be configured, e.g. when mounting. If all components are mounted to the air ventilation system, and the components have been provided with a component ID, and no configuration of any component has been made should the air ventilation system be in the state as disclosed in figure 4, i.e. all components at their right location but no connection or identity between the system specific system location ID and the component specific component ID.

In step b is the identifier provided with a system description of the air ventilation system. This system description could for example be the plan view in figure 3 wherein the location of each component is shown and has been provided with a system location ID. This plan view, or at least a configuration list with system location IDs for components of the plan view, may thus be loaded into the identifier. As is obvious, it may also be possible to only load a few of all components into the identifier if that should be desired for some reason as long as it comprises the system location ID of the component or components to be configured. Hence, the components, for which step a and step b has been made, may now be selected in the selection procedure (II) to be configured.

The selection procedure (II) has been divided into three partial steps, step c, d and e, which will be performed as described below.

In step c is the physical location of the desired component to be configured in the air ventilation system identified. It may be possible also to have a couple of prospects which may be chosen as the desired component if it is possible to have several indicators within perception distance, e.g. being able to see indicator lights for several components. However, a person who is configuring the system will walk to be in the vicinity of the desired component to be configured. The identifier should be brought to this location and located to be in reach for wireless communication with the desired component. The person who is at the location should also be aware of which of the components in the system he is selecting as the desired component or possible components. For example, the identifier could be set to identify a group of air diffusers and there may be several of these components within reach to be notified about their selective status by the identifier. Before we will continue with the next step, d, should it be noted that

In the next step, step d, is the identifier used for sending an identifying signal in order to identify the desired component. The signal sent from the identifier may thus reach a receiver or transceiver in the desired component via wireless communication. There are several ways in which this identification via wireless communication may be done which will be explained more in detail when referring to different embodiments of the configuration method. However, the identifier is adapted to send an identifying signal which the components are designed to be able to be identified from, in some cases for selecting a single component or for a group of components. In step e is it disclosed that step d shall be repeated until the indicating signal from the indicator of the desired component is the only component indicating a selected state and the identifier displays only the desired component, or displays only one component being in the same selected state as indicated by the indicator, of the components in the configuration list.

Hence, when the selection procedure (II) is finished should there be only one component selected in the identifier and there should only be the indicator on the desired component indicating only this physical component to be selected, thereafter may the configuration (III) step continue.

In the configuration procedure, comprising step e, is the component configured in the control system so as to be able to be identified concerning its location and identity by the central control unit. This may be achieved by a pairing event in which the desired component, having its unique component ID, is paired with the system location ID. The pairing event could be performed automatically when the component ID is recognized but preferably is there some control feature or action initiated by the operator, e.g. could the system location ID be displayed in the identifier. In addition, if available the feature is available, could the desired component indicate it is in a selected state. By pairing these IDs, the component ID and system location ID, these IDs may be connected to be recognized by each other and the component may be controlled by the central control unit.

The pairing event may be indicated in the identifier and/or on the component, e.g. by a flashing light while the component is pairing and then allow a light on the product to light or marking the location system ID in the identifier as being paired when the component is paired.

The identifier which is used for the identification and pairing of the components could be designed to either directly transfer the information to the central control unit or storing a number of paired components to be transferred as batch. For example, it may be desired to complete pairing of all components in a room before the pairing of the components actually is transmitted to the central control unit, or other memory, such that the central control unit may identify a component. The components could, if they are provided with a light indicator, be controlled to be off when unpaired, to be turned on with a fast blinking light when selected and during its pairing event where after they turn to blink with a lower frequency when they are paired but yet not have been accessible by the central control unit where after the light is turned on constantly when the component is configured to be recognized in the air ventilation control system by the central control unit.

The status of the system in figure 5 thus corresponds to the state when all products have been paired and configured in the system.

## Claims

1. A method for configuring components (1a, 1b, 1c, 1d, 1e, 1f, 1g, 1h) in an air treatment system (100), e.g. a Heating and Ventilating Air-Conditioning (HVAC) system, said air treatment system (100) comprising one or several components (1a-1h) being selected to be from the groups of flow control components (1a, 1b, 1c, 1d), sensor components (1e, 1f, 1g) or input control components (1h), said components (1a-h) being connected to a central control system (101) when the components (1a-h) are configured and the air treatment system (1) is in use, said components (1a-h) being provided with a transmitter and/or receiver (2) for sending an input signal to the central control unit (105) to be used for computing a control output command by the central control unit (105) and/or receiving an output signal from the central control system (105) in order to control the component (1a-h) associated with the respective transmitter and/or receiver (2), each of said components (1a-h) further being provided with an indicator (3) and an Electronic Control Unit (4) being programmed to activate the indicator (3) so as to indicate when the component has been selected by an identifier sending an identification signal selecting one or several of the components (1a-h) wherein said configuration comprises the steps of:
I. PREPARATION
a. Locating at least one component (1a-h) at its intended physical position in the air ventilation system (100), said component (1a-h) being assigned a unique component ID (cID) before or after it has been located at its intended position
b. Providing the identifier with a system description of the air ventilation system (100) including a configuration list with system location IDs (sl-ID) for components (1a-h) to be connected to the central control system (101)
II. SELECTION PROCEDURE
c. Identifying the physical location in the air ventilation system (100) of the desired component (1a-h) to be configured and locate the identifier to be in reach for wireless communication with the desired component (1a-h)
d. Using the identifier for sending an identifying signal in order to identify the desired component (1a-h)
e. Repeating step c until the indicating signal from the indicator (3) of the desired component (1a, 1b, 1c, 1d, 1e, 1f) is indicating a selected state and the identifier displays only the desired component (1a, 1b, 1c, 1d, 1e, 1f), or displays only one component (1a, 1b, 1c, 1d, 1e, 1f) being in the same selected state as indicated by the indicator, of the components in the configuration list
III. **CONFIGURATION**
f. Initiating a pairing event in which the desired component (1a-h) having its unique component ID (cID) and indicated to be in a selected state by the indicator (3) is paired with the system location ID, which is displayed in the identifier, such that the desired component (1a-h) may be recognized by the central control unit (105) by the system location ID.

2. A method according to claim 1 **characterized in that** step d, is performed by sending a group selective identifying signal from said identifier to identify a group of components (1a-h) within reach for the identifier, said group selective identifying signal causing the indicators (3) of a first subgroup of the identified group of components (1a-h) to provide a first indicating signal different from a second indicating signal from a second subgroup of the identified group of components (1a-h) whereby any of these subgroups may be selected by the identifier to be further processed by the identifier, e.g. to be used as the identified group of components (1a-h) in a repetition of step d.

3. A method according to claim 2 **characterized in that** if the subgroup of components (1a-h) selected to be further processed by the identifier comprises at least 2 components (1a-h) will there be a further selection signal sent to this group of components (1a-h) such that these components are further divided into at least two new groups of components to be selected to be further processed by the identifier.

4. A method according to claim 3 or 4 **characterized in that** if the subgroup of components (1a-h) selected to be further processed by the identifier comprises only one component (1a-h) will this component (1a-h) be further processed in step f and be used for a pairing event.

5. A method according to any previous claims 2-4 **characterized in that** the indicating signal from the indicators (3) is a blinking light and the indicating signal is differentiated by the frequency of the blinking.

6. A method according to any of claims 2-5 **characterized in that** the group selective identifying signal from the identifier is adapted to only include components (1a-h) within a specific product category and/or zone.

7. A method according to claim 1 **characterized in that** in step d is said identifier arranged to send a component specific signal corresponding to a single unique component ID (cID) to a multitude of components (1a-h) within reach for the identifier whereby one single indicator (3) corresponding to said unique component ID (cID) indicates that said single component (1a-h) is selected, said procedure being repeated until said component specific signal is selecting the unique component ID (cID) for a desired component (1a-h).

8. A method according to any previous claim **characterized in that** step d is performed by using an identifier which may positively identify said unique component ID (cID) of the desired component (1a-h) by pointing at or being within a prescribed distance from the physical component to be selected whereby a signal from said identifier causes the unique component ID (cID) of the desired component (1a-h) to be transmitted to the identifier.

9. A method according to any previous claim **characterized in that** said components comprises flow control components selected from the group of air diffusers (1a) or induction devices for admitting air into a room, exhaust air intake (1b) for ventilating air out of the room or dampers (1d) or valves for controlling the air flow in a ducting system (102).

## Patentansprüche

1. Verfahren zum Konfigurieren von Komponenten (1a, 1b, 1c, 1d, 1e, 1f, 1g, 1h) in einem Luftbehandlungssystem (100), z.B. einem Heizungs- und Lüftungs-Klimaanlagensystem (HLK), wobei das Luftbehandlungssystem (100) eine oder mehrere Komponenten (1a-1h) umfasst, welche ausgewählt sind aus den Gruppen von Strömungssteuerkomponenten (1a, 1b, 1c, 1d), Sensorkomponenten (1e, 1f, 1g) oder Eingangssteuerkomponenten (1h), wobei die Komponenten (1a-h) mit einem zentralen Steuersystem (101) verbunden werden, wenn die Komponenten (1a-h) konfiguriert werden und das Luftbehandlungssystem (1) in Verwendung ist, wobei die Komponenten (1a-h) mit einem Sender und/oder einem Empfänger (2) zum Senden eines Eingangssignals zu der zentralen Steuereinheit (105), welches zum Berechnen eines Steuerausgangsbefehls durch die zentrale Steuereinheit (105) zu verwenden ist, und/oder zum Empfangen eines Ausgangssignals von dem zentralen Steuersystem (105) ausgestattet sind, um die Komponente (1a-h) zu steuern, die dem jeweiligen Sender und/oder Empfänger (2) zugeordnet ist, wobei jede der Komponenten (1a-h) ferner mit einem Indikator (3) und einer elektronischen Steuereinheit (4) ausgestattet ist, die programmiert ist, den Indikator (3) zu aktivieren, um so anzuzeigen, wenn die Komponente durch einen Identifizierer ausgewählt worden ist, welcher ein Identifikationssignal sendet, das eine oder mehrere der Komponenten (1a-h) auswählt, wobei das Konfigurieren die Schritte umfasst:
I. VORBEREITUNG
a. Anordnen mindestens einer Komponente (1a-h) an ihrer vorgesehenen physikalischen Position in dem Lüftungssystem (100), wobei der Komponente (1a-h) eine eindeutige Komponenten-ID (cID) zugewiesen wird, bevor oder nachdem sie an ihrer vorgesehenen Position angeordnet worden ist;
b. Bereitstellen, für den Identifizierer, einer Systembeschreibung des Lüftungssystems (100) einschließlich einer Konfigurationsliste mit Systemanordnungs-IDs (sl-ID) für Komponenten (1a-h), die mit dem zentralen Steuersystem (101) zu verbinden sind;
II. AUSWAHLPROZEDUR
c. Identifizieren des physikalischen Orts der gewünschten Komponente (1a-h), die zu konfigurieren ist, in dem Lüftungssystem (100) und Anordnen des Identifizierers in Reichweite für eine drahtlose Kommunikation mit der gewünschten Komponente (1a-h);
d. Verwenden des Identifizierers zum Senden eines Identifikationssignals, um die gewünschte Komponente (1a-h) zu identifizieren;
e. Wiederholen von Schritt c, bis das Anzeigesignal von dem Indikator (3) der gewünschten Komponente (1a, 1b, 1c, 1d, 1e, 1f) einen ausgewählten Zustand anzeigt und der Identifizierer nur die gewünschte Komponente (1a, 1b, 1c, 1d, 1e, 1f) darstellt, oder von den Komponenten in der Konfigurationsliste nur eine Komponente (1a, 1b, 1c, 1d, 1e, 1f) darstellt, welche sich in dem gleichen ausgewählten Zustand wie durch den Indikator angezeigt befindet.
III. KONFIGURATION
f. Initiieren eines Paarungsereignisses, bei welchem die gewünschte Komponente (1a-h), welche ihre eindeutige Komponenten-ID (c-ID) aufweist und durch den Indikator (3) als in einem ausgewählten Zustand befindlich angezeigt wird, mit der im Identifizierer angezeigten Systemanordnungs-ID gepaart wird, derart, dass die gewünschte Komponente (1a-h) von der zentralen Steuereinheit (105) durch die Systemanordnungs-ID erkannt werden kann.

2. Verfahren nach Anspruch 1, **dadurch gekennzeichnet, dass** Schritt d durchgeführt wird durch Senden eines gruppenselektiven Identifikationssignals von dem Identifizierer, um eine Gruppe von Komponenten (1a-h) innerhalb einer Reichweite für den Identifizierer zu identifizieren, wobei das gruppenselektive Identifikationssignal die Indikatoren (3) einer ersten Untergruppe der identifizierten Gruppe von Komponenten (1a-h) dazu veranlasst, ein erstes Anzeigesignal bereitzustellen, das sich von einem zweiten Anzeigesignal von einer zweiten Untergruppe der identifizierten Gruppe von Komponenten (1a-h) unterscheidet, wobei jedwede dieser Untergruppen durch den Identifizierer ausgewählt werden kann, um durch den Identifizierer weiterverarbeitet zu werden, z.B. als die identifizierte Gruppe von Komponenten (1a-h) bei einer Wiederholung von Schritt d verwendet zu werden.

3. Verfahren nach Anspruch 2, **dadurch gekennzeichnet, dass** dann, wenn die Untergruppe von Komponenten (1a-h), die ausgewählt sind, von dem Identifizierer weiterverarbeitet zu werden, mindestens zwei Komponenten (1a-h) umfasst, ein weiteres Auswahlsignal vorhanden ist, das zu dieser Gruppe von Komponenten (1a-h) gesendet wird, derart, dass diese Komponenten weiter in mindestens zwei neue Gruppen von Komponenten aufgeteilt werden, die auszuwählen sind, von dem Identifizierer weiterverarbeitet zu werden.

4. Verfahren nach Anspruch 3 oder 4, **dadurch gekennzeichnet, dass** dann, wenn die Untergruppe von Komponenten (1a-h), die ausgewählt sind, von dem Identifizierer weiterverarbeitet zu werden, nur eine Komponente (1a-h) umfasst, diese Komponente (1a-h) in Schritt f weiterverarbeitet werden wird und für ein Paarungsereignis verwendet werden wird.

5. Verfahren nach einem der vorhergehenden Ansprüche 2 bis 4, **dadurch gekennzeichnet, dass** das Anzeigesignal von den Indikatoren (3) ein Blinklicht ist und das Anzeigesignal durch die Frequenz des Blinkens unterschieden wird.

6. Verfahren nach einem der Ansprüche 2 bis 5, **dadurch gekennzeichnet, dass** das gruppenselektive Identifikationssignal von dem Identifizierer ausgelegt ist, nur Komponenten (1a-h) innerhalb einer spezifischen Produktkategorie und/oder Zone zu beinhalten.

7. Verfahren nach Anspruch 1, **dadurch gekennzeichnet, dass** in Schritt d der Identifizierer ausgelegt ist, ein komponentenspezifisches Signal, das einer einzelnen eindeutigen Komponenten-ID (cID) entspricht, zu einer Mehrzahl von Komponenten (1a-h) innerhalb einer Reichweite für den Identifizierer zu senden, wobei ein einzelner Indikator (3), welcher der eindeutigen Komponenten-ID (cID) entspricht, anzeigt, dass die einzelne Komponente (1a-h) ausgewählt ist, wobei die Prozedur wiederholt wird, bis das komponentenspezifische Signal die eindeutige Komponenten-ID (cID) für eine gewünschte Komponente (1a-h) auswählt.

8. Verfahren nach einem vorhergehenden Anspruch, **dadurch gekennzeichnet, dass** Schritt d unter Verwendung eines Identifizierers durchgeführt wird, welcher die eindeutige Komponenten-ID (cID) der gewünschten Komponente (1a-h) positiv identifizieren kann, indem er darauf zeigt oder sich innerhalb eines vorgeschriebenen Abstands von der auszuwählenden physikalischen Komponente befindet, wobei ein Signal von dem Identifizierer dazu führt, dass die eindeutige Komponenten-ID (cID) der gewünschten Komponente (1a-h) zu dem Identifizierer übertragen wird.

9. Verfahren nach einem vorhergehenden Anspruch, **dadurch gekennzeichnet, dass** die Komponenten Strömungssteuerkomponenten umfassen, welche ausgewählt sind aus der Gruppe von Luftdiffusoren (1a) oder Induktionseinrichtungen zum Hereinlassen von Luft in einen Raum, Abluftansaugern (1b) zum Abführen von Luft aus dem Raum heraus, oder Klappen (1d) oder Ventilen zum Steuern der Luftströmung in einem Leitungssystem (102).

## Revendications

1. Procédé pour configurer des composants (1a, 1b, 1c, 1d, 1e, 1f, 1g, 1h) dans un système (100) de traitement de l'air, par exemple un système de chauffage, ventilation et climatisation (CVC), ledit système (100) de traitement de l'air comprenant un ou plusieurs composants (1a-1h) sélectionnés dans les groupes des composants régulateurs de débit (1a, 1b, 1c, 1d), des composants capteurs (1e, 1f, 1g) ou des composants de commande des entrées (1h), lesdits composants (1a-h) étant connectés à un système central de commande (101) quand les composants (1a-h) sont configurés et que le système (1) de traitement de l'air est en cours d'utilisation, lesdits composants (1a-h) étant pourvus d'un émetteur et/ou d'un récepteur (2), pour envoyer un signal d'entrée à l'unité centrale de commande (105), devant être utilisé pour calculer une instruction de sortie de commande par l'unité centrale de commande (105) et/ou recevoir un signal de sortie provenant du système central de commande (105) dans le but de commander le composant (1a-h) associé à l'émetteur et/ou au récepteur respectif (2), chacun desdits composants (1a-h) étant en outre pourvu d'un indicateur (3) et d'une Unité de Commande Electronique (4), programmée pour activer l'indicateur (3) de façon à indiquer quand le composant a été sélectionné par un identificateur envoyant un signal d'identification sélectionnant un ou plusieurs des composants (1a-h), ladite configuration comprenant les étapes suivantes :
I. PREPARATION
a. Positionnement d'au moins un composant (1a-h) sur sa position physique voulue dans le système (100) de ventilation de l'air, ledit composant (1ah) se voyant affecter un ID de composant (cID) unique avant ou après sa localisation sur la position voulue,
b. Fourniture à un identificateur d'une description du système (100) de ventilation de l'air, comprenant une liste de configuration comportant les ID de localisation du système (sl-ID) pour les composants (1a-h), pour connexion ay système central de commande (101).
II. PROCEDURE DE SELECTION
c. Identification de la localisation physique dans le système (100) de ventilation de l'air du composant souhaité (1a-h) devant être configuré, et localisation de l'identificateur pour être à portée d'une communication sans fil avec le composant souhaité (1a-h).
d. Utilisation de l'identificateur pour envoyer un signal d'identification dans le but d'identifier le composant souhaité (1a-h),
e. Répétition de l'étape c jusqu'à ce que le signal d'indication provenant de l'indicateur (3) du composant souhaité (1a, 1b, 1c, 1d, 1e, 1f) indique un état sélectionné, et que l'identificateur n'affiche que le composant souhaité (1a, 1b, 1c, 1d, 1e, 1f), ou n'affiche qu'un composant (1a, 1b, 1c, 1d, 1e, 1f), qui se trouve dans le même état sélectionné que celui qui est indiqué par l'indicateur, des composants de la liste de configuration.
III. CONFIGURATION
f. Déclenchement d'un événement de couplage, dans lequel le composant souhaité (1a-h), possédant son ID de composant (cID) unique, et indiqué comme se trouvant dans un état sélectionné par l'indicateur (3), est couplé à l'ID de localisation du système, qui est affiché dans l'identificateur, de telle sorte que le composant souhaité (1a-h) puisse être reconnu par l'unité centrale de commande (105) par l'ID de localisation du système.

2. Procédé selon la revendication 1, **caractérisé en ce que** l'étape d est mise en œuvre par envoi d'un signal d'identification sélectif de groupe provenant dudit identificateur pour identifier un groupe de composants (1a-h) à portée de l'identificateur, ledit signal d'identification sélectif de groupe amenant les indicateurs (3) d'un premier sous-groupe du groupe identifié de composants (1a-h) à fournir un premier signal d'indication, différent d'un second signal d'indication provenant d'un second sous-groupe du groupe identifié de composants (1a-h), ce grâce à quoi l'un quelconque de ces sous-groupes peut être sélectionné par l'identificateur pour subir un traitement plus poussé par l'identificateur, p.ex. pour être utilisé en tant que groupe identifié de composants (1a-h) lors d'une répétition de l'étape d.

3. Procédé selon la revendication 2, **caractérisé en ce que,** si le sous-groupe de composants (1a-h) sélectionné pour subir un traitement plus poussé par l'identificateur comprend au moins deux composants (1a-h), un signal de sélection supplémentaire va être envoyé à ce groupe de composants (1a-h) de telle sorte que ces composants subissent une subdivision supplémentaire en au moins deux nouveaux sous-groupes de composants devant être sélectionnés pour subir un traitement plus poussé par l'identificateur.

4. Procédé selon la revendication 3 ou 4, **caractérisé en ce que,** si le sous-groupe de composants (1a-h) sélectionné pour subir un traitement plus poussé par l'identificateur ne comprend qu'un composant (1a-h), ce composant (1a-h) subira un traitement plus poussé dans l'étape f et sera utilisé pour un événement de couplage.

5. Procédé selon l'une quelconque des revendications précédentes 2 à 4, **caractérisé en ce que** le signal d'indication provenant des indicateurs (3) est une lumière clignotante, et le signal d'indication est différencié par la fréquence du clignotement.

6. Procédé selon l'une quelconque des revendications 2 à 5, **caractérisé en ce que** le signal d'identification sélectif de groupe provenant de l'identificateur est conçu de façon à ne comprendre que les composants (1a-h) entrant dans une catégorie et/ou une zone de produits spécifique.

7. Procédé selon la revendication 1, **caractérisé en ce que,** dans l'étape d, ledit identificateur est agencé de façon à envoyer un signal spécifique de composants correspondant à un seul ID de composant (cID) unique à une multitude de composants (1a-h) à portée de l'identificateur, de sorte qu'un indicateur unique (3) correspondant audit ID de composant (cID) unique indique que ledit composant unique (1a-h) est sélectionné, ladite procédure étant répétée jusqu'à ce que ledit signal spécifique de composants sélectionne l'ID de composant (cID) unique pour un composant souhaité (1a-h).

8. Procédé selon l'une quelconque des revendications précédentes, **caractérisé en ce que** l'étape d est mise en œuvre par utilisation d'un identificateur qui peut identifier positivement ledit ID de composant (cID) unique du composant souhaité (1a-h), par pointage, ou par le fait qu'il se trouve à moins d'une distance prescrite du composant physique à sélectionner, ce grâce à quoi un signal provenant dudit identificateur amène l'ID de composant (cID) unique du composant souhaité (1a-h) à être émis vers l'identificateur.

9. Procédé selon l'une quelconque des revendications précédentes, **caractérisé en ce que** lesdits composants comprennent des composants régulateurs de débit sélectionnés dans le groupe des diffuseurs d'air (1a) ou des dispositifs d'aspiration destinés à admettre de l'air dans un local, d'une prise (1b) d'air d'échappement, dans le but d'évacuer l'air du local, ou des clapets (1d) ou des soupapes destinés à réguler le débit de l'air dans un ensemble de gaines (102).
